# EUROPÄISCHE PATENTSCHRIFT

(11) **EP 0 670 753 B1**
(45) Veröffentlichungstag und Bekanntmachung des Hinweises auf die Patenterteilung: **21.01.1998**
(21) Anmeldenummer: 94926157.2
(22) Anmeldetag: 05.08.1994
(51) Int. Cl.: B01J 2/20, B01J 2/26, B29B 9/10

(54) **VORRICHTUNG ZUR HERSTELLUNG VON GRANULAT**
DEVICE FOR PRODUCING A GRANULAR MATERIAL
DISPOSITIF DE PRODUCTION DE GRANULES

(30) Priorität: 28.09.1993 DE 4332952
(43) Veröffentlichungstag der Anmeldung: 13.09.1995
(73) Patentinhaber: Santrade Ltd., CH-6002 Luzern (CH)
(72) Erfinder: FROESCHKE, Reinhard, D-71384 Weinstadt-Beutelsbach (DE); KÖNIG, Axel, D-70374 Stuttgart (DE)
(74) Vertreter: Wilhelm, Hans-Herbert, Dr.-Ing.
(86) Internationale Anmeldenummer: EP9402607
(87) Internationale Veröffentlichungsnummer: WO9509045

(56) Entgegenhaltungen:
- DE-A- 2 000 283
- DE-A- 3 336 208
- DE-C- 4 013 405
- US-A- 3 233 022

## Beschreibung

Die Erfindung bezieht sich auf eine Vorrichtung zur Herstellung von Granulat aus fließfähigen, viskosen Massen, die in Tropfenform gebracht werden und erstarren oder gelieren, bestehend aus einem mit der fließfähigen Masse beschickten Behälter mit Ausflußöffnungen, die intermittierend durch ein periodisch daran vorbeigeführtes perforiertes Band geöffnet oder geschlossen werden.

Aus der EP-B-0 134 944 (DE-A-33 36 208) ist eine solche Vorrichtung bekannt, bei der als Ausflußöffnungen eines rohrförmigen Behälters ein durchgehender Schlitz vorgesehen ist, an dessen seitlichen Begrenzungswänden das perforierte Band anliegt. Der quer zur Bandlaufrichtung verlaufende Schlitz muß dabei eine gewisse Breite aufweisen, um den daran vorbeilaufenden Öffnungen des Bandes Zeit zu geben, sich mit der zu vertropfenden Masse zu füllen und diese dann portionsweise auf ein darunter befindliches Kühlband abzugeben. Dies führt insbesondere dann, wenn verhältnismäßig zähe Massen vertropft werden sollen, die unter Druck den Raum des Schlitzes anstehen, dazu, daß die sich aus der Schlitzfläche und dem Druck ergebende Kraft so groß wird, daß das an den seitlichen Begrenzungswänden des Schlitzes geführte Band nach außen abgedrückt wird, so daß in an sich unerwünschteweise zusätzliches Material sich auf der am Behälter anliegenden Seite des Bandes verteilt.

Der Erfindung liegt die Aufgabe zugrunde hier Abhilfe zu schaffen und eine Möglichkeit vorzuschlage, die ohne eine Funktionsbeeinträchtigung ein möglichst dichtes Anliegen des Bandes an der Außenfläche des Behälters gewährleistet.

Ausgehend von der Überlegung, daß eine Verkleinerung der Breite des Schlitzes insbesondere bei hohen Produnktionsgeschwindigkeiten und daher hohen Relativgeschwindigkeiten zwischen dem perforierten Band und dem Behälter nicht möglich ist, weil dann die Perforationsöffnungen im Band wegen der ihnen zur Verfügung stehenden kurzen Füllzeit sich nicht in der gewünschten Weise mit dem Material füllen, besteht die Erfindung darin, daß die Ausflußöffnungen von mehreren quer zur Laufrichtung des Bandes angeordneten Reihen von Öffnungen gebildet sind, die jeweils so gegeneinander versetzt sind, daß ihre von den Perforationsöffnungen des Bandes überlaufene Querschnittsfläche unabhängig von der Lage der Bewegungsbahn der Perforationsöffnungen immer gleich groß ist. Diese Ausgestaltung weist zum einen den Vorteil auf, daß die Gesamtfläche der Austrittsöffnungen des Behälters verringert und damit auch die auf das Band wirkende Kraft verkleinert wird, daß zum anderen aber wegen der Hintereinanderanordnung der Öffnungen im Behälter genügend Zeit zur Verfügung steht, um die Perforationsöffnungen des Bandes bei ihrem Vorbeilauf an den verschiedenen Reihen von Öffnungen ausreichend mit Material zum Zweck der Vertropfung zu füllen.

Die erfindungsgemäße Ausgestaltung weist aber auch den Vorteil auf, daß trotz der Anordnung von Reihen von Öffnungen nicht die Gefahr besteht, daß bei einem seitlichen Verlaufen des Perforationsbandes, das sich im Betrieb nie exakt in Laufrichtung führen läßt, stets die gleiche Menge der zu vertropfenden Masse in die Perforationsöffnungen des Bandes eintritt, wie das natürlich bei einem quer zur Bandlaufrichtung verlaufenden Schlitz stets der Fall ist. Durch die erfindungsgemäße Anordnung der Öffnungen wirken die als Ausflußöffnungen dienenden Reihen der Einzelöffnungen in der gleichen Weise wie ein durchgehender Schlitz.

In Weiterbildung der Erfindung können alle Öffnungen gleich groß sein und ihr Umfang eine gemeinsame Tangente mit Öffnungen in anderen Reihen aufweisen, die parallel zur Aufrichtung des Bandes verläuft. Dadurch wird die Gewähr gegeben, daS unabhängig von der Laufrichtung der Perforationsöffnungen stets die gleiche Querschnittsfläche überlaufen wird, so daß auch bei einem seitlichen Abweichen der Laufrichtung des Perforationsbandes nicht die Gefahr auftritt, daß zu wenig Material in die Perforationsöffnungen eintritt. Natürlich wird die absolute Größe des Durchmessers der Bohrungen, die unter sich zwar gleich groß sind, jeweils an die Eigenschaften des zu vertropfenden Materiales angepaßt. Der Durchmesser der in Bandlaufrichtung liegenen Öffnungen kann aber auch unterschiedlich und z.B. an eine vorgegebene Größenverteilung angepaßt sein. Es ist dadurch möglich, die Größe, Gestalt und die Kirstallinität der Pastillen zu beeinflussen.

Es hat sich bei einer solchen Ausführungsform auch als sehr vorteilhaft erwiesen, wenn der gesamte freie Querschnitt der Öffnungen durch mindestens einen im Behälter angeordneten Schieber einstellbar ist, der zweckmäßig an der Innenwand des Behälters anliegt. Diese Ausgestaltung nämlich ermöglicht es, die gesamte austretende Menge zu regulieren und eine Anpassung an die von der Produktionsgeschwindigkeit abhängige Bandlaufgeschwindigkeit zu erreichen.

In Weiterbildung der Erfindung wird bei einer Vorrichtung der eingangs genannten Art mit einem Behälter mit einer gewölbten am Band anliegenden Außenfläche zweckmäßig vorgesehen, die entgegen der Bandlaufrichtung weisende Vorderkante der Außenfläche als eine Art Einlauftrichter auszubilden. In weiterer Ausgestaltung kann auch die Außenfläche in Bandlaufrichtung eine unterschiedliche Krümmung aufweisen und es kann schließlich der gesamte Behälter schwenkbar angeordnet werden. Durch diese Maßnahmen kann die Führung des perforierten Bandes verändert werden, so daS es auch möglich wird, den Abstand und die Lage des perforierten Bandes gegenüber dem darunterliegenden Kühlband in gewissen Umfang zu variieren. Es hat sich gezeigt, daß dies für die Tropfenbildung und für die rechtzeitige Ablösung der Tropfen, insbesondere bei hohen Produktionsgeschwindigkeiten, von Vorteil ist. Die Ausbildung der Vorderkante in der Art eines Einlauftrichters sorgt dafür, daß an der Bandinnenfläche etwa noch anhaftendes Material in die Perforationsöffnungen gedrückt wird.

Um von vorneherein eine unkontrollierte Benetzung durch von der Innenseite des perforierten Bandes vom Obertrum herab tropfendes Material zu verhindern, wird bei einer Vorrichtung der eingangs genannten Art mit einem endlosen perforierten Band, an dessen unteren Trum der Behälter sitzt, vorgesehen, daß unter dem oberen Trum zu einer zentralen Sammelrinne verlaufende Auffangwände angeordnet werden. Der in Bandlaufrichtung hinter dem Behälter liegenden Umlenktrommel kann zusätzlich eine Auffangvorrichtung für außen am Band anhaftende Masse zugeordnet werden, die wiederum mit der Sammelrinne verbunden ist. Bei einer anderen Ausführungsform kann aber auch vorgesehen werden, diese Umlenktrommel in ihrem gesamten äußeren Umlenkbereich von einem Einweiser eng zu umgeben. Dadurch wird eventuell an der Außenseite des Bandes anhaftendes Material in der Art eines Zellenrades, dessen Zellen durch die Perforationsöffnungen des Bandes gebildet werden, in dem Bereich des Obertrumes des Bandes geführt, von wo die Masse dann auf die Auffangwände tropfen kann.

Vorteilhaft ist bei allen Ausführungsformen, wenn die Sammelrinne in der Bandlaufrichtung unmittelbar vor dem Behälter angeordnet ist und mit einer nach unten gerichteten Austrittsöffnung versehen wird. Von den Auffangwänden und ggf. von der der Umlenktrommel zugeordneten Auffangrichtung aufgenommenes Material kann auf diese Weise kurz vor dem Behälter auf die Bandinnenfläche gelangen, wird von der Außenfläche des Behälters in die Perforationsöffnungen gedrückt und kann dann zusammen mit den aus den übrigen Öffnungen des Behälters austretenden Material nach unten abtropfen. Es versteht sich von selbst, daß die Auffangwände, die Sammelrinne und Auffangvorrichtung oder der Einweiser entsprechend beheizt sind, um die Fließfähigkeit des Materiales aufrecht zu erhalten. Die dem Band zugeordnete Aussenfläche der Sammelrinne kann schließlich auch noch entgegen der Laufrichtung geneigt und in der Art eines Einstreifers ausgebildet sein, so daß bereits an dieser Stelle das aus der Sammelrinne kommende Material in die Perforationsöffnungen gedrückt wird.

Auch dem Obertrum des umlaufenden Bandes kann ein Einstreifer zugeordnet sein, in dessen Bereich ein an der inneren Fläche des Obertrumes anliegender Abstreifer vorgesehen ist, der über einer der Auffangwände liegt. Auch diese Maßnahme sorgt dafür, daß ein unerwünschtes Verkleben des Bandes vermieden wird.

Schließlich wird vorteilhaft auch noch vorgesehen, beide Umlenktrommeln synchron anzutreiben. Bei der bekannten Einrichtung ist nur eine Umlenktrommel angetrieben gewesen und man ist davon ausgegangen, daß die zweite, in der Laufrichtung des unter dem endlosen Band angeordneten Kühlbandes vordere Umlenktrommel von dem perforierten Band mitgenommen wird. Es hat sich jedoch gezeigt, daß es sich trotz aller Zusatzmaßnahmen nicht vollständig vermeiden läßt, daß die Innenfläche des umlaufenden Perforationsbandes eine Schicht des zu vertropfenden Materiales aufweist. Dies kann ein Durchrutschen des Bandes auf der zweiten Umlenktrommel bewirken, wenn diese nicht angetrieben ist.

Die Erfindung ist anhand von Ausführungsbeispielen in der Zeichnung dargestellt und wird im folgenden erläutert. Es zeigen:
- Fig. 1: eine schematische Seitenansicht eines erfindungsgemäßen Bandtropfenformers,
- Fig. 2: die vergrößerte Darstellung des mit der zu vertropfenden Masse beschickten Behälters der Einrichtung der Fig. 1 in vergrößertem Maßstab und teilweise geschnitten,
- Fig. 3: einen Teilschnitt durch den Ausflußbereich eines Behälters der Fig. 2 mit der Zuordnung zu den daran vorbeilaufenden Perforationsöffnungen des Bandes in schematischer Darstellung,
- Fig. 4: eine Teildarstellung der linken Umlenktrommel der Einrichtung der Fig. 1 bei einer Variante, und
- Fig. 5: eine vergrößerte Darstellung des Umlenkbereiches der Umlenktrommel der Fig. 4 mit dem Einweiser.

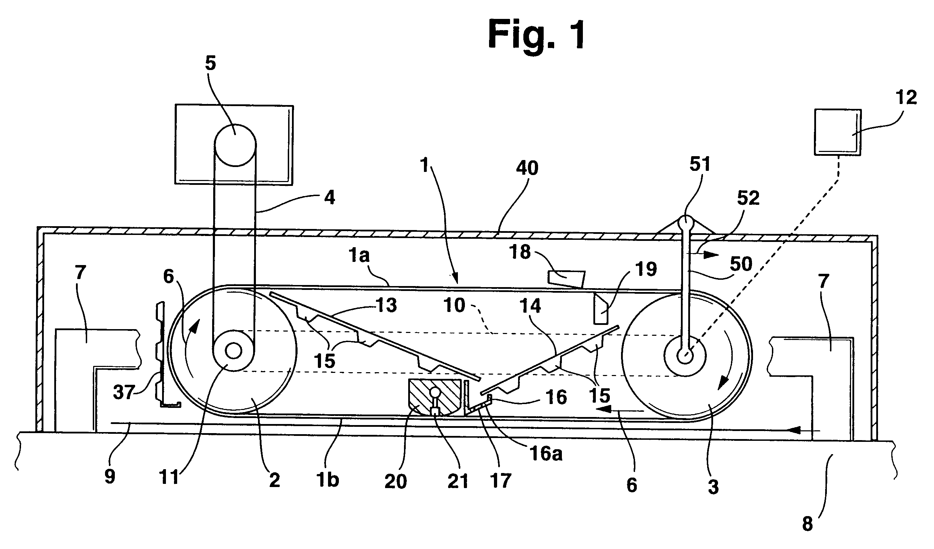

In der Fig. 1 ist ein sogenannter Bandtropfenformer gezeigt, der ein endlos umlaufendes perforiertes Band (1) aufweist, das um zwei Umlenktrommeln (2 und 3) geführt ist. Die Umlenktrommel (2) ist über einen Antriebsriehmen oder -kette (4) von einem Antriebsmotor (5) aus angetrieben. Die Drehrichtung erfolgt dabei im Sinn des Pfeiles (6). Die Lagerung der Umlenktrommeln (2) des Antriebes erfolgt in einem nur schematisch angedeuteten Traggestell (7), das wiederum an einem ebenfalls nur schematisch gezeigten Gestell (8) angebracht ist, das die Führungseinrichtungen für eine Kühleinrichtung aufnimmt, die beim Ausführungsbeispiel aus einem Kühlband (9) besteht. Das Kühlband (9) ist zweckmäßigerweise ein Stahlband, das mit der gleichen Geschwindigkeit mit dem Untertrum (1b) des perforierten Bandes (1) läuft.

In der dargestellten Ausführungsform ist auch die Umlenktrommel (3) synchron mit der Umlenktrommel (2) angetrieben, was über eine Verbindungskette oder einen Verbindungsriemen (10) von einem fest mit der Umlenktrommel (2) verbundenen Ritzel (11) aus erfolgt. Die Drehgeschwindigkeit der Umlenktrommel (3) kann über bekannte Einrichtungen erfaßt und in einer Steuereinrichtung (12) ausgewertet werden, die wiederum den Antrieb des perforierten Bandes (1) steuert. Das Band (1) wird dadurch gespannt, daß die Umlenktrommel (3) am unteren Ende eines Schwenkarms (50) gelagert ist, dessen Schwenkachse (51) außerhalb einer das Band (1) umgebenden Absaughaube (40) angeordnet ist. Agressive Dämpfe werden auf diese Weise von der Stelle der Schwenkachse (51) ferngehalten. Der Schwenkarm wird über eine im Sinn des Pfeiles (52) wirkende Kraft der Spannung des Bandes (1) beaufschlagt.

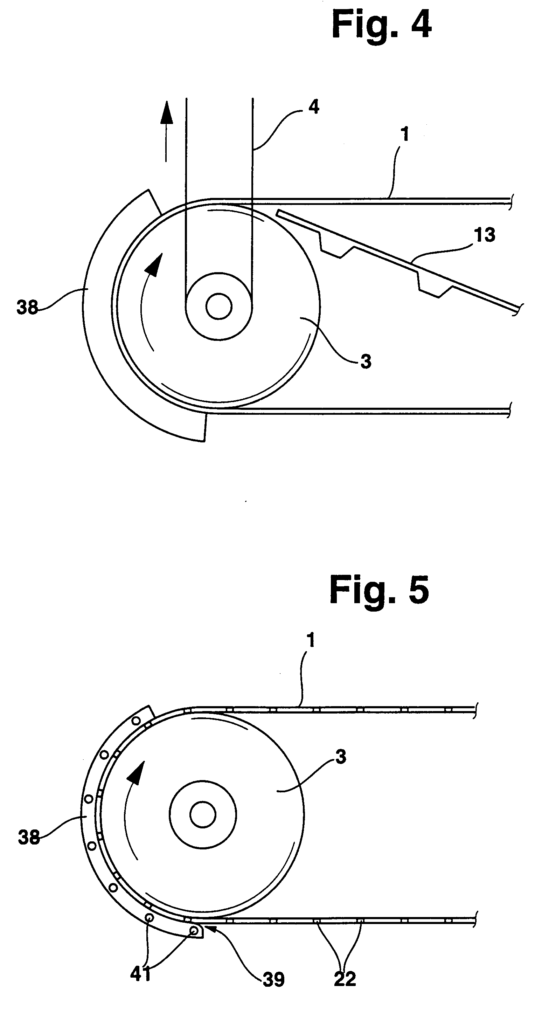

Im Inneren des endlos umlaufenden Bandes (1) sind zwei geneigte Auffangwände (13 und 14) vorgesehen, die beim Ausführungsbeispiel jeweils mit nach unten weisenden Ausbuchtungen versehen sind, welche Kanäle (15) bilden, durch die ein Heizmedium zur Temperierung der Auffangwände (13 und 14) geleitet werden kann. Die Auffangwand (13) verläuft dabei etwa tangential zur Umlenktrommel (2) ausgehend schräg nach unten und die Auffangwand (14) etwa tangential von der Oberseite der Umlenktrommel (3) aus ebenfalls nach unten. Die Auffangwände (13 und 14) stehen daher V-förmig zueinander und enden an ihrer untersten Stelle jeweils oberhalb einer Sammelrinne (16), die quer zum unteren Trum (1b) des Bandes (1) verläuft und in dieser Richtung mit einem Austrittsschlitz (17) oder mit mehreren in einer Reihe angeordneten Austrittsöffnungen versehen ist. Die Unterseite (16a) der Sammelrinne (16) ist dabei entgegen der Laufrichtung des Untertrums (1b) schräg nach oben gerichtet, so daß die Außenseite (16a) in der Art eines Spachtels wirkt, durch den das durch den Schlitz (17) nach unten austretende, von den Auffangwänden (13 und 14) kommende Material in die Perforationsöffnungen des Bandes (1), die aus Fig. 5 ersichtlich sind, hereingedrückt wird. Dem Obertrum (1a) des Bandes (1) ist oberhalb der Auffangwand (14) ein außen anliegender Einweiser (18) und ein innen anliegender Schaber (19) zugeordnet, die beide dafür sorgen, daß überschüssiges Material, das sich noch auf Band (1) befindet, nach Möglichkeit vollständig entfernt und der Auffangwand (14) zugeleitet wird.

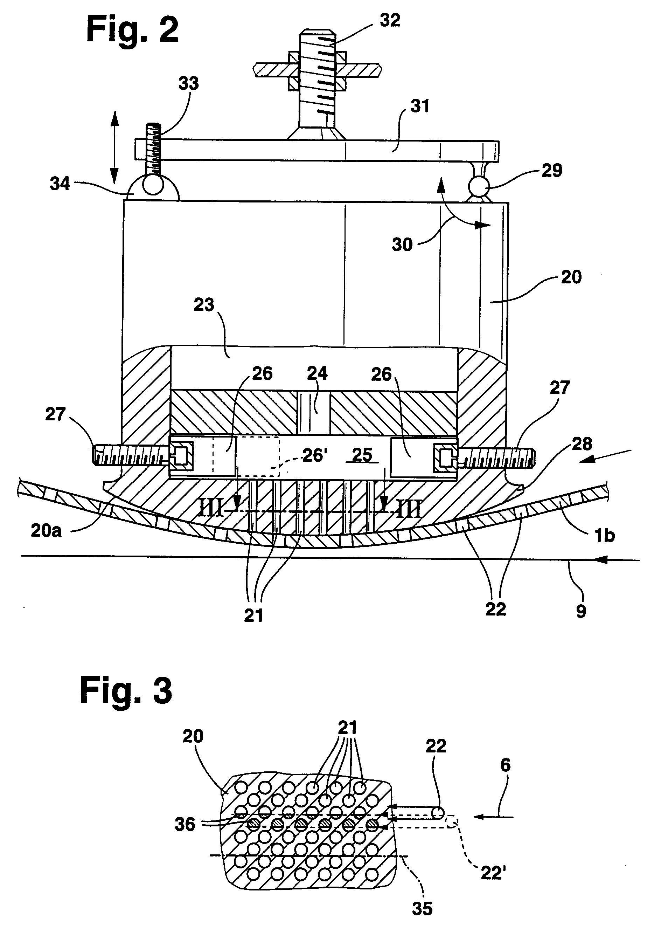

Das Untertrum (1b) liegt an einem sich quer zur Laufrichtung des Bandes (1) erstreckenden Behälter (20) an, dessen Aufbau aus den Fig. 2 und 3 deutlich wird. Diesem Behälter (20), der im Prinzip rohrförmig ausgebildet ist, wird in nicht näher dargestellter, weil bekannter Weise von einer Stirnseite her das zu vertropfende Material in erhitztem, fließfähigem Zustand zugeführt und tritt dann an der Unterseite des Behälters (20) durch dort vorgesehene Austrittsöffnungen (21) und durch die Perforationsöffnungen (22) des Bandes (1) hindurch um in Tropfenform auf das Kühlband (9) zu fallen, wo die Tropfen dann erstarren oder gelieren.

Fig. 2 macht deutlich, daß der Behälter (20) als ein Hohlprofil ausgebildet ist, das einen Zuströmkanal (23) bildet, durch den die zu vertropfende Masse in der vorher bereits erwähnten Weise nach axialer Zuführung in weitere über die Länge des Profiles verteilte Öffnungen (24) in einen Verteilraum (25) gelangt, von dem aus die Zuführung durch mehrere in der Laufrichtung des Untertrumes (1b) in gleichen Abstand hintereinander angeordnete Reihen von Öffnungen (21) nach unten gedrückt wird. Dort setzt der Abtropfvorgang dadurch ein, daß die Öffnungen (22) des Bandes (1) nacheinander an den Öffnungen (21) der verschiedenen Reihen vorbeilaufen. Wie Fig. 2 zeigt, sind in dem Verteilraum (25) seitlich Schieberplatten (26) vorgesehen, die jeweils mit Hilfe von Schraubspindeln (27) aus ihrer durchgezogen gezeichneten Lage in das Innere des Raumes (25) verschiebbar sind, so daß dadurch, wie mit der Lage (26') angedeutet ist, wahlweise noch eine oder mehrere Reihen der Öffnungen (21) abgeschlossen werden können, um eine Angleichung der Produktmenge an den erwünschten Tropfvorgang und die Produktionsgeschwindigkeit zu ermöglichen. Das Hohlprofil (20) besitzt auf der gegen die Bandlaufrichtung des Untertrumes (1b) weisenden Zulaufseite, im Bereich einer am Untertrum (1b) anliegenden Außenfläche einen schnabelartigen Vorsprung (28), der eine Art Einlauftrichter zusammen mit dem Untertrum (1b) bildet, der dafür sorgt, daß das von der Sammelrinne (16) abgegebene Material bei der Relativbewegung zwischen Band (1) und Behälter (20) auch in die Perforationsöffnungen (22) des Bandes (1) hereingedrückt wird.

Die Außenfläche (20a) des Behälterprofiles (20) ist gewölbt ausgebildet und kann so gestaltet sein, daß sie eine unterschiedliche Krümmung von der Eingangsnase (28) bis zu ihrer Hinterkante aufweist. Dadurch können die Anpreßverhältnisse zwischen dem Band (1) und dem Profil (20) verändert werden. Dem gleichen Zweck dient auch eine schwenkbare Aufhängung des gesamten Behälterprofils (20). Fig. 2 zeigt, daß das Behälterprofil (20) um eine Schwenkachse (29) herum im Sinn der Pfeile (30) schwenkbar angeordnet ist. Das wird dadurch erreicht, daß die Schwenkachse (29) an einem Träger (31) angebracht ist, der mit einem oder mehreren Befestigungsbolzen (32) mit dem Traggestell (7) für den Bandtropfenformer fest verbunden ist. Der Träger (31) besitzt an seinem an der Schwenkachse (29) abgewandten Ende ein Gewinde, in das ein Schraubbolzen (33) eingreift, der mit seinem unteren Ende drehbar in einer Kugelhalterung (34) gelagert ist, die fest mit dem Profil (20) verbunden ist. Wird daher der Schraubbolzen (33) gedreht, so kann eine Abstandsänderung zwischen Träger (31) und Profil (20) erreicht werden. Das Profil (20) schwenkt im Sinn des Pfeiles (30) um die Achse (29). Auch durch diese Maßnahme lassen sich die Anlegverhältnisse zwischen Band (1) und Außenseite (20a) verändern. Diese Ausgestaltung ermöglicht es, je nach Materialart und Konsistenz oder je nach Relativgeschwindigkeit zwischen Band (1) und Profil (20) die für die Tropfenbildung besten Verhältnisse einzustellen.

Fig. 3, die einen Ausschnitt aus der Anordnung der Öffnungen (21) des Behälterprofiles (20) zeigt, macht deutlich, daß die einzelnen Öffnungen (21) in den in der Laufrichtung (6) des Bandes (1) hintereinander liegenden Reihen versetzt zueinander angeordnet sind. Im Ausführungsbeispiel ist dies dadurch geschehen, daß die Öffnungen (21) der zweiten und vierten Reihe in der Laufrichtung (6) gegenüber den Öffnungen (21) der ersten und zweiten Reihe jeweils um einen vollen Öffnungsdurchmesser (21) gegeneinander versetzt sind. Eine an den Umfang der Öffnungen (21) gelegte Tangente (35), die in der Bandlaufrichtung (6) verläuft, bildet daher auch die Tangente an die Umfänge der versetzt in den nachgeordneten Reihen angeordneten Öffnungen (21). Diese Anordnung bewirkt, daß eine der Öffnungen (22) in dem Band (1), wie schematisch angedeutet ist, nacheinander die Öffnungen der ersten und dritten Reihe und ggf. weitere Reihen voll überquert. Die Öffnung (22) kann sich daher beim Überstreichen der vorgesehenen Reihen von Öffnungen (21) in der gewünschten Weise mit dem zu vertropfenden Material füllen und dieses nach unten abgeben.

Diese exakte Ausrichtung der Öffnungen (22) in der Bandlaufrichtung zu den Öffnungen (21) läßt sich aber in der Praxis nicht aufrecht erhalten, weil eine exakte Führung des Bandes (1) in seiner Laufrichtung nicht möglich ist. Die Öffnungen (22) werden daher aus ihrer in der Laufrichtung (6) vorgesehenen Bewegungsbahn zum Teil auch seitlich ausweichen und beispielsweise die Lage (22') einnehmen können. Die Öffnung in der Lage (22') überläuft dann, wie gestrichelt angedeutet ist, einen Teil des Querschnittes von jeweils quer zur Laufrichtung benachbarten Öffnungen (21) und zwar so, daß die insgesamt überlaufene Querschnittsfläche (36), die schraffiert angedeutet ist, auch wieder der Querschnittsfläche entspricht, die die Öffnung (22) beim Überlaufen der beiden hintereinanderliegenden Öffnungen (21) überstrichen hat.

Durch diese Ausgestaltung und Anordnung gelangt daher stets die gleiche Menge von zu vertropfendem Material in die Öffnungen (22) und zwar unabhängig davon, wie die Ausrichtung in der Laufrichtung (6) zu den Öffnungen (21) ist. Dies erlaubt es von der aus dem Stand der Technik bekannten Anordnung eines durchgehenden Schlitzes als Ausflußöffnung abzugehen. Der Gesamtquerschnitt der Öffnungen (21) kann sich in ausreichendem Maß in der Laufrichtung des Bandes erstrecken, so daß genug Zeit besteht, daß sich die Öffnungen (22) mit Material füllen. Auf der anderen Seite kann die Querschnittsfläche selbst wesentlich geringer und durch die Verstellung der Schieberplatten (16) an den jeweiligen Einsatzfall angepaßt werden. Die zwischen Hohlprofil (20) und Band (1) auftretende Kraft, die sich aus dem Druck des zu vertropfenden Materiales im Raum (25) und der Gesamtquerschnittsfläche der Öffnungen (21) zusammensetzt, kann daher so verändert werden, daß das Band (1) immer ausreichend dicht an der Außenfläche (20a) geführt wird.

Beim Ausführungsbeispiel der Fig. 2 und 3 sind die Öffnungen (21) unter sich alle gleich groß. Natürlich bestimmt sich ihr Durchmesser nach der Art und Viskosität des zu vertropfenden Materiales.

Es ist aber auch möglich, die in der Bandlaufrichtung (6) hintereinanderliegenden Öffnungen (21) unterschiedlich groß zu gestalten. In jeder senkrecht zur Bandlaufrichtung (6) liegenden Reihe sind alle Öffnungen gleich groß, in jeder dahinter liegenden Reihe unter sich ebenfalls, aber gegenüber den Öffnungen der vorhergehenden oder danach folgenden Reihe unterschiedlich.

So ist es beispielsweise möglich, die in Bandlaufrichtung (6) hintereinander liegenden Öffnungen im Durchmesser immer größer werden zu lassen. Die in der Bandlaufrichtung abgetropfte Menge ist daher anfangs gering. Durch die dadurch bedingte schnelle Abkühlung bis zum Auftreffen der nächsten Teilmenge aus den nachfolgenden Öffnungen kann die Kristallbildung vorteilhaft beeinflußt werden. Man kann auf diese Weise durch die Ausbildung der Größe der Öffnungen Einfluß auf die Kristallinität des Produktes nehmen.

Das Ausführungsbeispiel der Fig. 1 besitzt in dem von dem Innenraum des Bandes (1) abgewandten Umlenkbereich eine Auffangvorrichtung (37) für das im Umlenkbereich aus den Öffnungen (22) austretenden Restmaterial. Auch diese Auffangvorrichtung ist beheizt und sie steht in nicht näher dargestellter Weise mit der Sammelrinne (16) so in Verbindung, daß das von der Auffangvorrichtung (37) aufgefangene Material ebenfalls zur Auffangrinne (16) gelangt.

Eine Variante einer solchen Auffangvorrichtung zeigt die Ausführungsform der Fig. 4 und 5. Dort ist im Bereich der Umlenkung der Umlenktrommel (3) ein halbschalenförmiger Einweiser (38) zugeordnet, der zusammen mit dem umlaufenden Band (1) ein Abtropfen von Material an der Umlenkstelle verhindert und in der Art eines Zellenrades (s. Fig. 5) dafür sorgt, daß noch in den Öffnungen (22) befindliches Material zum Obertrum des Bandes (1) geführt wird, wo es dann auf die Auffangwände (13 und 14) abtropfen kann.

Fig. 1 zeigt schließlich, daß die gesamte Einrichtung (der Bandtropfenformer) von einer Abdeckhaube (40) umgeben ist, die beheizt sein kann und die dafür sorgt, daß auch im Bereich des Obertrumes (1a) eine ausreichende Temperatur vorherrscht, um Material entweder abtropfen zu lassen oder die Möglichkeit zu eröffnen, daß es durch den Einweiser (18) und/oder den Schaber (19) auf die Auffangwand (14) gebracht wird. Dies ist wichtig, um beim erneuten Überlaufen der Öffnungen (21) Verstopfungen zu vermeiden, die beispielsweise durch in den Öffnungen (22) noch verbliebenes, teilweise erstarrtes Material bewirkt werden könnten. Durch die Haube können auch Dämpfe abgesaugt werden.

Der Einweiser (38) ist, wie Fig. 5 zeigt, mit einem Einlaufschnabel (39) und mit in an sich bekannter Weise als Kanäle (41) ausgebildeten Heizeinrichtungen versehen, die seine Temperierung gewährleisten.

## Patentansprüche

1. Vorrichtung zur Herstellung von Granulat aus fließfähigen viskosen Massen, die in Tropfenform gebracht werden und erstarren oder gelieren, bestehend aus einem mit der fließfähigen Masse beschickten Behälter mit Ausflußöffnungen, die intermittierend durch ein periodisch daran vorbeigeführtes perforiertes Band geöffnet oder geschlossen werden, dadurch gekennzeichnet, daß die Ausflußöffnungen von mehreren quer zur Laufrichtung (6) des Bandes (1) angeordneten Reihen von Öffnungen (21) gebildet sind, die jeweils so gegeneinander versetzt sind, daß ihre von den Perforationsöffnungen (22) des Bandes (1) überlaufene Querschnittsfläche unabhängig von der Lage der Bewegungsbahn der Perforationsöffnungen immer gleich groß ist.

2. Vorrichtung nach Anspruch 1, dadurch gekennzeichnet, daS alle Öffnungen (21) gleich groß sind und ihr Umfang jeweils eine gemeinsame Tangente (35) mit versetzten Öffnungen in anderen Reihen aufweist, die parallel zur Laufrichtung (6) des Bandes (1) verläuft.

3. Vorrichtung nach Anspruch 1, dadurch gekennzeichnet, daß die in Bandlaufrichtung (6) hintereinanderliegenden Öffnungen (21) in ihrer Größe unterschiedlich sind.

4. Vorrichtung nach Anspruch 3, dadurch gekennzeichnet, daS die Größe des Durchmessers nach einer vorgegebenen Funktion veränderlich ist.

5. Vorrichtung nach Anspruch 1, dadurch gekennzeichnet, daß der gesamte freie Querschnitt der Öffnungen (21) durch mindestens einen im Behälter (20) angeordneten Schieber (26) einstellbar ist.

6. Vorrichtung nach Anspruch 5, dadurch gekennzeichnet, daß der Schieber (26) in einem den Öffnungen (21) vorgelagerten Raum (25) angeordnet ist.

7. Vorrichtung nach Anspruch 1 mit einem Behälter mit einer gewölbten am Band (1) anliegenden Außenfläche (20a), dadurch gekennzeichnet, daß die entgegen der Bandlaufrichtung (6) weisende Vorderkante (28) der Außenfläche (20a) eine Art Einlauftrichter bildet.

8. Vorrichtung nach Anspruch 7, dadurch gekennzeichnet, daß die Außenfläche (20a) in der Bandlaufrichtung (6) eine unterschiedliche Krümmung aufweist.

9. Vorrichtung nach Anspruch 7, dadurch gekennzeichnet, daß der Behälter (20) schwenkbar angeordnet ist.

10. Vorrichtung nach Anspruch 1 mit einem endlosen perforierten Band, an dessen unteren Trum der Behälter (20) sitzt, dadurch gekennzeichnet, daß unter dem oberen Trum (1a) des Bandes (1) Auffangwände (13, 14) angeordnet sind, die zu einer zentralen Sammelrinne (16) verlaufen.

11. Vorrichtung nach Anspruch 10, dadurch gekennzeichnet, daß an der in der Bandlaufrichtung (6) hinter dem Behälter (20) liegenden Umlenktrommel (2) eine Auffangvorrichtung (37) für außen am Band anhaftende und abtropfende Masse vorgesehen ist, die mit der Sammelrinne (16) in Verbindung steht.

12. Vorrichtung nach Anspruch 10, dadurch gekennzeichnet, daß an der hinter dem Behälter (20) liegenden Umlenktrommel (3) ein im Umlenkbereich an dem Band (1) anliegender Einweiser (38) vorgesehen ist, der sich über den gesamten Umlenkbereich erstreckt.

13. Vorrichtung nach Anspruch 10, dadurch gekennzeichnet, daS die Sammelrinne (16) in der Bandlaufrichtung (6) vor dem Behälter (20) angeordnet ist und nach unten gerichtete Austrittsöffnungen (17) besitzt.

14. Vorrichtung nach Anspruch 13, dadurch gekennzeichnet, daß die dem Band (1) zugewandte Außenfläche (16a) der Sammelrinne (16) entgegen der Laufrichtung (16) geneigt ausgebildet ist.

15. Vorrichtung nach einem der Ansprüche 10 bis 14, dadurch gekennzeichnet, daß der Außenseite des Obertrums (1a) ein Einstreifer (18) zugeordnet ist

16. Vorrichtung nach den Ansprüchen 10 bis 15, dadurch gekennzeichnet, daß im Bereich des Einstreifers (18) und über einer der Auffangwände (14) ein an der Innenseite des Obertrumes (1a) anliegender Abstreifer (19) vorgesehen ist.

17. Vorrichtung nach einem der Ansprüche 10 bis 16, dadurch gekennzeichnet, daß die Auffangwände (13, 14), die Sammelrinne (16), die Auffangvorrichtung (37), der Einweiser (38), sowie der Einstreifer (18) und der Abstreifer (19) beheizt sind.

18. Vorrichtung nach Anspruch 1, dadurch gekennzeichnet, daß beide Umlenktrommeln (2, 3) synchron angetrieben sind.

19. Vorrichtung nach Anspruch 1, dadurch gekennzeichnet, daß eine der Umlenktrommel (3) zur Bandspannung über einen Schwenkarm (50) verstellbar gelagert ist, dessen Schwenklager (51) außerhalb der Absaughaube (40) liegt.

## Claims

1. An apparatus for producing granulate from flowable viscous compositions which are converted to drop form and solidify or gel, consisting of a container charged with the flowable composition and comprising outlet orifices which are opened or closed intermittently by a perforated belt which is passed by them periodically, characterised in that the outlet orifices are constituted by a plurality of rows of orifices (21) disposed crosswise to the direction (6) of movement of the belt (1) and which are respectively so staggered in respect of one another that their cross-sectional surface over which the perforations (22) in the belt (1) pass is always of the same size regardless of the position of the movement path of the perforations.

2. An apparatus according to claim 1, characterised in that all orifices (21) are of the same size, their circumference in each case having a common tangent (35) with offset orifices in other rows and extending parallel with the direction (6) of movement of the belt (1).

3. An apparatus according to claim 1, characterised in that the orifices (21) disposed one after another in the direction (6) of belt run vary in size.

4. An apparatus according to claim 3, characterised in that the size of the diameter varies according to a predetermined function.

5. An apparatus according to claim 1, characterised in that the total free cross-section of the orifices (21) can be adjusted by at least one slide valve (26) disposed in the container (20).

6. An apparatus according to claim 5, characterised in that the slide valve (26) is disposed in a space (25) upstream of the orifices (21).

7. An apparatus according to claim 1 with a container having a convexly curved outer surface (20a) bearing on the belt 1, characterised in that the leading edge (28) of the outer surface (20a) which is directed opposite the direction (6) of belt run forms a kind of inlet funnel.

8. An apparatus according to claim 7, characterised in that in the direction (6) of belt run, the outer surface (20a) has a different curvature.

9. An apparatus according to claim 7, characterised in that the container (20) is pivotally disposed.

10. An apparatus according to claim 1 with an endless perforated belt on the bottom strand of which the container (20) is seated, characterised in that there are under the upper strand (1a) of the belt (1) catching walls (13, 14) which extend to a central collecting channel (16).

11. An apparatus according to claim 10, characterised in that provided on the reversing drum (2) situated after the container (20) in the direction (6) of belt run there is a device (37) for catching composition clinging to and then dropping off the outside of the belt, said device (37) communicating with the collecting channel (16).

12. An apparatus according to claim 10, characterised in that there is on the reversing drum (3) situated after the container (20) a guide (38) which bears on the belt (1) in the area of direction reversal extends over the total area of direction reversal.

13. An apparatus according to claim 10, characterised in that the collecting channel (16) is disposed upstream of the container (20), in the direction (6) of belt run and has downwardly directed outlet orifices (17).

14. An apparatus according to claim 13, characterised in that the outer surface (16a) of the collecting channel (16) which is directed towards the belt (1) is inclined against the direction (16 sic!) of belt run.

15. All apparatus according to one of claims 10 to 14, characterised in that an inwardly directing scraper is associated with the outside of the top strand (1a).

16. All apparatus according to claims 10 to 15, characterised in that there is in the region of the inwardly directing scraper (18) and over one of the collecting walls (14) a removing scraper (19) which bears on the inside face of the top strand (1a).

17. All apparatus according to one of claims 10 to 16, characterised in that the collecting walls (13, 14), the collecting channel (16), the collecting device (37), the guide (38), as well as the inwardly directing scraper (18) and the removing scraper (19) are heated.

18. All apparatus according to claim 1, characterised in that both reversing drums (2, 3) are driven in synchronism.

19. All apparatus according to claim 1, characterised in that one of the reversing drums (3) is mounted for adjustment by means of a pivoting arm (50) for tensioning of the belt, the pivot bearing (51) being disposed outside the vacuum extraction hood (40).

## Revendications

1. Dispositif pour fabriquer des granulés à partir de masses visqueuses fluides, qui sont mises sous la forme de gouttes et se solidifient ou gélifient, constitué par un récipient chargé par une masse fluide et comportant des ouvertures de sortie, qui sont ouvertes ou fermées d'une manière intermittente par une bande perforée qui passe périodiquement devant ces ouvertures, caractérisé par le fait que les ouvertures de sortie sont formées par plusieurs rangées, disposées transversalement par rapport à la direction de circulation (6) de la bande (1), d'ouvertures (21) qui sont décalées réciproquement de telle sorte que leur surface en coupe transversale, au-dessus de laquelle se déplacent les ouvertures formant perforations (22) de la bande (1), est toujours de même taille indépendamment de la position de la voie de déplacement des ouvertures formant perforations.

2. Dispositif selon la revendication 1, caractérisé en ce que toutes les ouvertures (21) sont de même taille et leur périphérie comporte respectivement une tangente commune (35) à des ouvertures décalées situées dans d'autres rangées, tangente qui est parallèle à la direction de circulation (6) de la bande (1).

3. Dispositif selon la revendication 1, caractérisé en ce que les ouvertures (21), qui sont situées les unes derrière les autres dans la direction de circulation (6) de la bande, ont des tailles différentes.

4. Dispositif selon la revendication 3, caractérisé en ce que la valeur du diamètre est variable selon une fonction prédéterminée.

5. Dispositif selon la revendication 1, caractérisé en ce que la section transversale libre totale des ouvertures (21) est réglable à l'aide d'au moins un poussoir (26) disposé dans le récipient (20).

6. Dispositif selon la revendication 5, caractérisé en ce que le poussoir (26) est disposé dans un espace (25) situé en avant des ouvertures (21).

7. Dispositif selon la revendication 1, comportant un récipient possédant une surface extérieure cintrée (20a), qui s'applique contre la bande (1), caractérisé en ce que le bord avant (28), qui est tourné en sens opposé de la direction (6) de circulation de la bande, de la surface extérieure (20a) forme une sorte d'entonnoir d'entrée.

8. Dispositif selon la revendication 7, caractérisé en ce que la surface extérieure (20a) possède, dans la direction (6) de circulation de la bande, une courbure différente.

9. Dispositif selon la revendication 7, caractérisé en ce que le récipient (20) est monté de manière à pouvoir pivoter.

10. Dispositif selon la revendication 1, comportant une bande perforée sans fin, sur le brin inférieur de laquelle est disposé le récipient (20), caractérisé en ce qu'au-dessous du brin supérieur (1a) de la bande (1) sont disposées des parois de collecte (13, 14) qui s'étendent parallèlement à une goulotte centrale de collecte (16).

11. Dispositif selon la revendication 10, caractérisé en ce que sur le tambour de renvoi (2), qui est situé en arrière du récipient (20) dans la direction (6) de circulation de la bande est prévu un dispositif de collecte (37) servant à collecter une masse qui adhère extérieurement à la bande et dégoutte, ce dispositif de collecte étant relié à la goulotte de collecte (16).

12. Dispositif selon la revendication 10, caractérisé en ce que sur le tambour de renvoi (3) situé en arrière du récipient (20) est disposé un guide (38) qui s'applique contre la bande (1) dans la zone de renvoi et s'étend sur l'ensemble de la zone de renvoi.

13. Dispositif selon la revendication 10, caractérisé en ce que la goulotte de collecte (16) est disposée en amont du récipient (20) dans la direction (6) de circulation de la bande et possède des ouvertures de sortie (17) dirigée vers le bas.

14. Dispositif selon la revendication 13, caractérisé en ce que la surface extérieure (16a), tournée vers la bande (1), de la goulotte de collecte (16) est inclinée en sens opposé de la direction de circulation (6).

15. Dispositif selon l'une des revendications 10 à 14, caractérisé en ce qu un grattoir (18) est associé à la face extérieure du brin supérieur (1a).

16. Dispositif selon les revendications 10 à 15, caractérisé en ce qu'une racle (19), qui s'applique contre la face intérieure du brin supérieur (1a), est prévue dans la zone du grattoir (18) et au-dessus de l'une des parois de collecte (14).

17. Dispositif selon les revendications 10 à 16, caractérisé en ce que les parois de collecte (13, 14), la goulotte de collecte (16), le dispositif de collecte (37), le guide (38) ainsi que le grattoir (18) et la racle (19) sont chauffés.

18. Dispositif selon la revendication 1, caractérisé en ce que les deux tambours de renvoi (2, 3) sont entraînés de façon synchrone.

19. Dispositif selon la revendication 1, caractérisé en ce que l'un des tambours de renvoi (3) est monté, pour réaliser la mise en tension de la bande, de manière à être réglable, sur un bras pivotant (50), dont le palier de pivotement (51) est situé à l'extérieur du capot d'aspiration (40).
